# EUROPÄISCHE PATENTSCHRIFT

(11) **EP 0 520 596 B1**
(45) Veröffentlichungstag und Bekanntmachung des Hinweises auf die Patenterteilung: **24.05.1995**
(21) Anmeldenummer: 92250165.5
(22) Anmeldetag: 23.06.1992
(51) Int. Cl.: E21B 17/042, F16L 15/00, F16B 33/06, C10M 111/02

(54) **Verfahren zur Vorbehandlung der Verbindungselemente einer gasdichten Muffen-Rohrverbindung**
Connection element pretreatment process for a gastight sleeve-pipe coupling
Procédé de traitement préparatoire d'éléments de connexion d'un raccord de tuyaux étanche au gaz

(30) Priorität: 26.06.1991 DE 4121488
(43) Veröffentlichungstag der Anmeldung: 30.12.1992
(73) Patentinhaber: MANNESMANN Aktiengesellschaft, 40027 Düsseldorf (DE)
(72) Erfinder: Krings, Reiner, W-4000 Düsseldorf 31 (DE); Nimtschek, Hansjoachim, W-4130 Moer-Kapellen (DE)
(74) Vertreter: Meissner, Peter E., Dipl.-Ing.

(56) Entgegenhaltungen:
- EP-A- 0 329 990
- EP-A- 0 393 802

## Beschreibung

Eine Rohrverbindung eines aus miteinander verschraubbaren Gewinderohren bestehenden Stranges für den Einsatz in der Erdöl- und Erdgasindustrie hat zum einen die Aufgabe die Stranglast aufzunehmen und zum anderen die Dichtheit der Verbindung zu sichern. Zur Erfüllung dieser Aufgabe weist der Gewindeabschnitt der Rohrenden und der Muffe z. B. ein konisches API-Gewinde mit einer entsprechenden Überdeckung auf. Bedingt durch die Gewindeüberdeckung entstehen beim Verschrauben hohe Oberflächenpressungen. Zur Beherrschung dieser großen Belastung wurden Oberflächenbeschichtungen und Fette entwickelt, die ein Verschrauben ohne Fressen ermöglicht. Diese Gewindefette sind schmierfähige Pasten mit einem hohen Anteil an feinverteilten Feststoffpartikeln, wie z. B. Graphit, Metalle oder Teflon. Außer einem problemlosen Verschrauben unterstützen diese Fette die hydraulische Dichtheit im Gewindebereich der Verbindung.

Bei der von verschiedenen Herstellern entwickelten gasdichten Muffen-Rohrverbindungen wird die Dichtheit der Verbindung zumeist durch hohe Kontaktpressungen aufgrund einer Überdeckung im metallischen Dichtsitz erzielt.

Die Stoßschultern dienen als Einschraubbegrenzung und sie sorgen dafür, daß trotz steigender Stranglast der metallische Dichtsitz aktiviert bleibt. Das konische Gewinde braucht demzufolge keine Dichtfunktion zu übernehmen und seine Aufgabe besteht im Gegensatz zu API-Rund- und Buttress-Gewinden nur in der Übertragung der Stranglast. Um gasdichte Verbindungen im Gewinde- und Dichtsitzbereich zuverlässig verschrauben zu können, wird bei diesen Rohrverbindungen auf der Basis von un- und mittellegierten Kohlenstoffstählen fast ausschließlich das Phosphatieren als Oberflächenbeschichtung angewendet und standardisierte Feststoffschmierpasten, wie z. B. API-Fett verwendet, um Freßerscheinungen auszuschalten und Mehrfachverschraubungen sicher zu ermöglichen.

Dieses Verfahren ist aber nicht anwendbar bei hochlegierten austenitischen Stählen mit Nickel- und Chromgehalten größer 20 Gew% und Molybdängehalten größer 2,5 Gew%.

Eine der Möglichkeiten Mehrfachverschraubungen bei austenitischen Stählen zu gewährleisten ist das Ionenimplantieren der Dichtungs- und Gewindebereiche der Muffe. Bei diesem Verfahren dringen ionisierte Metalle, z. B. Palladium, Silber, Chrom oder Gold in die Muffenoberfläche. Nach dieser Behandlung wird vor dem Verschrauben ein standardisiertes API-Fett als Schmiermittel aufgetragen. Diese teure Vorbehandlung ist nur in einer Spezialfirma möglich und bedeutet für den Verwender eine aufwendige Logistik und eine Abhängigkeit möglicherweise nur von einem Lieferanten.

Aus der EP-A-0329990 ist eine gasdichte hochlegierte Ölfeld-Rohrverbindung bekannt mit mindestens 7,5 Gew.-% Cr. Diese Verbindung weist einen metallischen Dichtsitz und eine Stoßschulter auf. Um die hochbelasteten Abschnitte der Verbindung vor Spaltkorrosion zu schützen, werden diese mit einem Überzug einer nichtmetallischen Substanz mit einer Dicke von 1 bis 100 um versehen. Der Überzug besteht aus einer Einzel- oder Mehrfachschicht von keramischen Oxiden, Nitriden oder Karbiden. Als Oxide können beispielsweise TiO₂, Al₂O₃, ZrO₂ oder Cr₂O₃ verwendet werden. Der Überzug wird wahlweise aufgetragen mittels Ionenimplantierung, Zerstäubung, chemischen Dampfniederschlages, Plasma oder Sprühen.

Ein Verfahren zur Vorbehandlung der Verbindungselemente einer gasdichten Rohrverbindung ist in der EP-A-0393802 offenbart. Diese Verbindung weist ebenfalls einen metallischen Dichtsitz und Stoßschultern auf. Die Dichtungs- und Gewindebereiche der Muffe werden zunächst mit einem Überzug versehen, wobei für Verbindungselemente aus hochlegierten Werkstoffen dies vorzugsweise Kupfer ist. Danach wird vor dem Verschrauben Öl als Schmiermittel auf die Muffe und auf die blanken Zapfen aufgetragen. Vorzugsweise ist das Öl ein Motoren- oder Gleitbahnöl.

Aufgabe der Erfindung ist es, eine einfache die menschliche Gesundheit nicht beeinträchtigende Vorbehandlung der Verbindungselemente einer gasdichten Muffen-Rohrverbindung anzugeben, mit der bei hochlegierten austenitischen Stählen und bei austenitischen Werkstoffen auf Nickelbasis eine Mehrfachverschraubung reproduzierbar sichergestellt ist.

Diese Aufgabe wird mit den kennzeichnenden Merkmalen des Hauptanspruches gelöst.

Die genannte metallfreie Paste ist an sich bekannt und wird von der Firma Metallit GmbH vertrieben. Die Hauptbestandteile dieser Paste sind pflanzliche Öle und Weißöle sowie Silikate, Titanoxid und Zinksulfid als Feste Bestandteile. Das Schmiermittel ist extrem temperatur- und hochdruckbeständig und hat den Vorteil, daß es nicht gesundheitsschädlich ist.

Versuche haben nun ergeben, daß das Verfahren dann besonders wirksam ist, wenn die Dichtungs- und Gewindebereiche der Muffe in bekannter Weise mit Kupfer überzogen werden und die Zapfen der beiden zu verbindenden Rohre blank bleiben. Bei der Durchführung der Mehrfachverschraubung (bis 10 mal) wurde außerdem festgestellt, daß entgegen den üblichen Erwartungen das Verschraubbild nach einigen Verschraubungen sogar noch besser wurde. Als Ursache dafür wird angesehen, daß die Keramikpaste ähnlich wie eine Polierpaste wirkt und die mikroskopisch kleinen Unebenheiten an den Gewindeflächen und Flanken eingeebnet werden.

Ein weiterer Vorteil der Verwendung dieser Keramikpaste als Schmiermittel für Rohrverbindungen ist darin zu sehen, daß die Paste nicht gesundheitsschädlich ist. Es sind deshalb keine besonderen Schutzmaßnahmen für die Bedienungsmannschaft auf dem Bohrturm erforderlich. Zum anderen ist diese Paste hervorragend für geothermische Bohrungen in Heilbädern geeignet, da die geförderte Sole wegen der medizinischen Anwendung beim Menschen nicht durch Öle oder Fette verunreinigt werden und keine die Gesundheit möglicherweise beeinträchtigende Metalle bzw. Metallverbindungen enthalten darf. Dieser Anwendungsbereich ist dann nicht nur auf die erfindungsgemäßen hochlegierten austenitischen Stähle beschränkt, sondern gilt dann auch für zum Beispiel 13%ige Chromstähle und Kohlenstoffstähle.
Ein weiterer Vorteil der Verwendung dieser Keramikpaste als Schmiermittel für Rohrschraubverbindungen ist ihre hohe Temperaturbeständigkeit (bis 1000° C). Die üblicherweise verwendeten Schmiermittel wie API-Fett und Fette auf Teflonbasis haben nur eine Temperaturbeständigkeit bis ca. 130 - 150° C. Das bedeutet, daß bei langzeitigem Überschreiten dieser Temperaturen das Schmiermittel sich zersetzt und ihre Schmierwirkung verliert.

Anhand der Zeichnung wird das erfindungsgemäße Verfahren näher erläutert.

Es zeigen:
- Figur 1a: einen Teillängsschnitt durch eine vorbehandelte Muffe

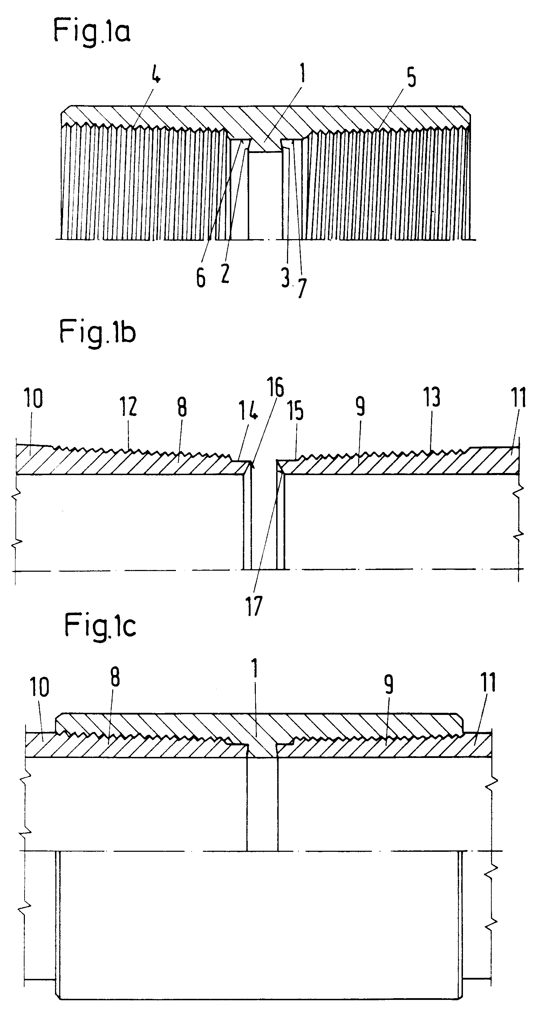

- Figur 1b: einen Teillängsschnitt der unbehandelten Zapfen
- Figur 1c: einen Teillängsschnitt sowie eine Ansicht der Rohrverbindung im verschraubten Zustand.

In Figur 1a ist in einem Teillängsschnitt die vorbehandelte Muffe 1 dargestellt. Nach der hier nicht gezeigten chemischen Vorbehandlung sind der Dichtsitzbereich 6,7, beide Stoßschultern 2,3 sowie beide Gewindeabschnitte 4,5 mit einer dünnen Kupferschicht überzogen. Die als Zapfen 8,9 ausgebildeten Verbindungselemente der beiden zu verschraubenden Rohre 10,11 bleiben unbehandelt blank (Fig. 1b). Jedes Zapfenelement 8,9 weist einen Gewindeabschnitt 12,13, eine Dichtsitzfläche 14,15 und eine Stoßschulter 16,17 auf. Vor dem Verschrauben werden sowohl die Muffe als auch die Zapfen 8,9 vollständig gereinigt und anschließend alle Verbindungselemente mit der an sich bekannten Paste auf Keramikbasis eingepinselt.

Figur 1c zeigt die Rohrverbindung im verschraubten Zustand, wobei die Dichtflächen 14,15 der Zapfenelemente 8,9 zusammen mit den Dichtflächen 6,7 der Muffe 1 einen metallischen Dichtsitz bilden. Die Gewindeabschnitte 4,5, 12,13, sind komplementär konisch zueinander ausgebildet. Der gewählte Gewindet für die Gewindeabschnitte 4,12,13 ist für das erfindungsgemäße Verfahren von untergeordneter Bedeutung.

## Patentansprüche

1. Verfahren zur Vorbehandlung der Verbindungselemente (1, 8, 9) einer gasdichten Muffen-Rohrverbindung aus austenitischen Stählen mit Chrom- und Nickelgehalten größer 20 Gew.-% und Molybdängehalten größer 2,5 Gew.-% sowie aus austenitischen Werkstoffen mit Nickelgehalten größer 50 Gew.-% und Chrom- und Molybdängehalten größer 10 Gew.-% hergestellten Futter-(Casing) und Förderrohren (Tubing) für die Erdöl- und Erdgasindustrie mit metallischem Dichtsitz (6, 7, 14, 15) und Stoßschulter (2, 3, 16, 17),
dadurch gekennzeichnet,
daß zum mehrfachen Verschrauben in an sich bekannter Weise der Dichtungs-(6, 7) und Gewindebereich (4, 5) der Muffe (1) mit einem metallischen Überzug versehen und vor dem Verschrauben auf den gereinigten Dichtungs-(6, 7, 14, 15) und Gewindebereichen (4, 5, 12, 13) der Verbindungselemente (1, 8, 9) eine an sich bekannte metallfreie Paste auf Keramikbasis als Schmiermittel auf die Muffe (1) und auf die blanken Zapfen (8, 9) der zu verbindenden Rohre (10, 11) aufgetragen wird, wobei Silikate, Titanoxid und Zinksulfid als feste Bestandteile sowie pflanzliche Öle und Weißöle Hauptbestandteil der Paste sind.

## Claims

1. A method for the preliminary treatment of the connecting elements (1, 8, 9) of a gastight socket-pipe connection made of austenitic steels having chromium and nickel contents of more than 20% by weight and molybdenum contents of more than 2.5% by weight and also casing pipes and tubing for the petroleum and natural gas industry made of austenitic materials having nickel contents of more than 50% by weight and chromium and molybdenum contents of more than 10% by weight with a metallic sealing seat (6, 7, 14, 15) and impact shoulder (2, 3, 16, 17), characterised in that for multiple screwing in known manner the sealing (6, 7) and thread (4, 5) regions of the socket (1) are provided with a metallic coating and before screwing onto the cleaned sealing (6, 7, 14, 15) and thread (4, 5, 12, 13) regions of the connecting elements (1, 8, 9) a known, metal-free, ceramic-based paste is applied as a lubricant to the socket (1) and to the bare necks (8, 9) of the pipes (10, 11) which are to be connected, with silicates, titanium oxide and zinc sulphide as solid constituents and also vegetable oils and white oils being the main constituents of the paste.

## Revendications

1. Procédé pour le traitement préparatoire des éléments de liaison (1,8,9) d'un raccord de tubes à manchon étanche aux gaz de chemises et conduits pour l'industrie du pétrole et du gaz naturel, en aciers austénitiques ayant des teneurs en chrome et nickel supérieures à 20% en poids et des teneurs en molybdène supérieures à 2,5% en poids, ainsi qu'en matières austénitiques ayant des teneurs en nickel supérieures à 50% en poids et des teneurs en chrome et molybdène supérieures à 10% en poids, comportant un siège étanche métallique (6,7,14,15) et un épaulement (2,3,16,17),
caractérisé en ce que, pour le vissage multiple, de façon connue en soi, la zone d'étanchéité (6,7) et la zone filetée (4,5) du manchon (1) sont munies d'un revêtement métallique et, avant le vissage sur les zones d'étanchéité (6,7,14,15) et filetées (4,5,12,13) nettoyées des éléments de liaison (1,8,9), il est appliqué une pâte non métallique connue en soi à base de céramique comme lubrifiant sur le manchon (1) et sur les tourillons dénudés (8,9) des tubes (10,11) à relier, des silicates, de l'oxyde de titane et du sulfure de zinc formant les constituants solides de la pâte et des huiles végétales et des huiles blanches le constituant principal.
